# EUROPEAN PATENT APPLICATION

(11) **EP 3 508 488 A1**
(43) Date of publication of application: **10.07.2019**
(21) Application number: 18151497.7
(22) Date of filing: 12.01.2018
(51) Int. Cl.: C07F 1/08

(54) **USE OF A COPPER(II) AZIDE COMPLEX AS A PRIMARY EXPLOSIVE**

(30) Priority: 05.01.2018 EP 18150491
(71) Applicant: EMTO GmbH, 81477 München (DE)
(72) Inventor: KLAPÖTKE, Thomas M., 81477 München (DE); STIERSTORFER,Jörg, 82237 Wörthsee (DE); WURZENBERGER, Maximilian H. H., 83607 Holzkirchen (DE); SZIMHARDT Norbert, 80687 München (DE)
(74) Representative: Dr. Gassner & Partner mbB

(57) **Abstract**

The invention concerns the use of a copper(II) azide complex as a primary explosive, wherein the copper(II) azide complex is of general formula Cuₐ(N₃)₂ₐ(L)ₓ, wherein L is a ligand, a = 1 to 6 and x = 1 to 6.

## Description

The invention concerns the use of copper(II) azide complex as a primary explosive, a new copper(II) azide complex, a method for synthesizing a copper(II) azide complex and a ligand for the formation of a copper(II) azide complex.

From Puszynski, M. M., et al., J. J. Inorg. Chem. 2016, 1(1): 003 tetraazido(1,2-di(1H-tetrazol-1-yl)ethane)dicopper(II) is known. The intent of the authors was to replace lead styphnate in the M42 primer, while maintaining other compounds in the formulation. Experiments in which the copper salt was used in primer cups showed that the primer cups suffered a firing pin perforation and punched-out on majority of the fired primers. Though the authors stated that further investigation into the failure of the primer integrity is required to provide a full understanding, they concluded that the copper salt may be suited as lead azide replacement candidate. However, no solution for the observed problem of primer cup punch-out was provided.

Wu, Bi-Dong, et al., Z. Anorg. Allg. Chem. 2014, 640, (7), 1467 to 1473 discloses synthesis of six multi-ligand coordination compounds of the general formula [M₃(AMTz)₄(N₃)₆], wherein M is Cu, Co, Ni, Zn, Mn, and Cd and wherein AMTz is 4-amino-3,5-dimethyl-1,2,4-triazole. It has been observed by sensitivity measuring that the compounds were insensitive.

The most applied primary explosive in percussion caps still is lead styphnate. Lead styphnate is reliable, cheap, easy to manufacture and shows perfect initiation behavior. However, the compound was put on the candidate list of authorization (substances of very high concern, Annex XIV) for the REACH (Registration, Evaluation, Authorization and Restriction of Chemicals) regulations in 2011 due to its toxicity and its significant contamination of the environment.

"Green" alternatives for lead containing primer mixtures were introduced onto the market in the past, using diazodinitrophenol (DDNP) as primary explosive and tetrazene as sensitizer. A mixture by the former Dynamit Nobel company with these ingredients is called SINTOX®. However, DDNP and tetrazene, suffer from various disadvantages. DDNP for example can cause allergic reactions and pollutes the groundwater. Tetrazene has a poor thermal stability and low initiation efficiency.

The problem to be solved by the present invention is to provide a substance that can be used as a primary detonator or igniter, the use of such a substance, a method for synthesizing such a substance and a ligand for the formation of such a substance. The substance shall be able to replace lead styphnate and/or lead azide in a primary detonator or igniter.

The problem is solved by the features of claims 1, 11, 12 and 15 of the present invention. Embodiments of the invention are subject-matter of claim 2 to 10, 13 and 14.

According to the invention a use of a copper(II) azide complex as a primary explosive is provided, wherein the copper(II) azide complex is of general formula Cuₐ(N₃)₂ₐ(L)ₓ, wherein L is a ligand, a = 1 to 6, in particular 1 to 5, in particular 1 to 4, and x = 1 to 6,
- wherein L consists of an azole or comprises at least one azole moiety, wherein in case of presence of more than one azole moiety the azole moieties are directly linked, linked via a single carbon, single nitrogen or single oxygen atom or linked via a carbon atoms comprising linker which linker comprises at least 3 carbon atoms or at least one aromatic structure
   or
- wherein L comprises more than one azole moiety, wherein the azole moieties are linked via a linker which linker comprises or consists of at least 3 nitrogen atoms or comprises at least 2 carbon atoms and one oxygen atom
   or
- wherein L comprises more than one azole moiety, wherein the azole moieties are linked via a linker which linker comprises 2 carbon atoms or comprises or consists of 2 nitrogen atoms, wherein at least one of the azole moieties is substituted
   or
- wherein L is 1,2-di(tetrazol-1-yl)ethane (1,1-dte), 1,2-di(tetrazol-2-yl)ethane (2,2-dte) or 1-(tetrazol-1-yl)-2-(tetrazol-2-yl)ethane (1,2-dte), a = 2 and the copper(II) azide complex is contained in a mixture consisting of 5% by weight to 25% by weight, in particular 10% by weight to 25% by weight, in particular 14% by weight to 20% by weight, in particular 15% by weight to 18% by weight, of the copper(II) azide complex and for the rest of Al or another reducing agent, Ba(NO₃)₂ or another oxidizing agent, Sb₂S₃ or a further reducing agent, pentaerythritol tetranitrate (PETN) or another energetic compound and a binding agent, wherein tetrazene is not present in the mixture
   or
- wherein L is 1,2-di(tetrazol-1-yl)ethane (1,1-dte), 1,2-di(tetrazol-2-yl)ethane (2,2-dte) or 1-(tetrazol-1-yl)-2-(tetrazol-2-yl)ethane (1,2-dte), a = 2 and the copper(II) azide complex is contained in a mixture consisting of 90% by weight to 99% by weight, in particular 93% by weight to 98% by weight, in particular 95% by weight to 98% by weight, in particular 95% by weight to 97% by weight, of the copper(II) azide complex and for the rest of a binding agent.

The single carbon atom or single nitrogen atom linking the azole moieties is understood as atom which binding sites not occupied by azole moieties are occupied by hydrogen atoms. A substituted azole or azole moiety is understood as an azole or an azole moiety in which a hydrogen atom bound to a carbon or nitrogen atom is substituted by another atom or an atom group. The inventors found in particular that an unwanted high sensitivity and/or maximum pressure occurring during reaction of the primary explosive can be prevented when at least one acidic proton, i. e. a hydrogen atom bound to nitrogen or oxygen, is substituted by another atom or an atom group and in particular when all of the acidic protons are substituted by other atoms or atom groups.

The azole may be pyrrol, imidazole, pyrazole, 1,2,3-triazole, 1,2,4-triazole or pentazole and the azole moiety may be any moiety of pyrrol, imidazole, pyrazole, 1,2,3-triazole, 1,2,4-triazole, tetrazole or pentazole.

Al or the other reducing agent, such as Mg, B, Zr, Ti, Si, Ce and/or another metal and/or an alloy thereof and/or a metal hydride, usually functions as fuel.

The primary explosive may be a primary detonator compound or igniter compound in a primary detonator device or an igniter device. A use as primary explosive can replace lead styphnate in percussion or in igniting mixtures for a propelling charge e. g. in small arm ammunition (e. g. for rifles, pistols etc.) or big bore ammunition (e. g. for mortars etc.) as well as in gas generators, airbags and chemical oxygen generators. A use as main component in a priming composition can replace lead azide in such a composition, e. g., in a stab detonator or in a bridgewire detonator.

By the use according to the invention it is possible to provide a primary explosive for igniter and detonator devices which is free of lead and of the known primary explosives such as diazodinitrophenol (DDNP) or diazodinitrophenolate, potassium-5,7-dinitro-[2,1,3]-benzoxadiazole-4-olate-3-oxide, potassium dinitrobenzofuroxanate, tetrazene and copper(I) 5-nitrotetrazolate (DBX-1). DDNP and diazodinitrophenolate are light sensitive and not compatible with many desired further substances.

The binding agent can be any binding agent known in the art, e. g. paraffin, dextrin, nitrocellulose, a polyacetate or a polyvinyl comprising compound such as polyvinylacetate. The inventors have recognized that the problems known from Puszynski, M. M., et al. can be solved either by the specific design of the ligand indicated in the first, second, third or fifth alternative of claim 1 or by the specific mixture given in the fourth alternative of claim 1. An important feature of the specific mixture is the absence of tetrazene present in the mixture known from Puszynski, M. M., et al..

In an embodiment the azole, the azole moiety, the azole moieties or at least one of the azole moieties is/are substituted by a substituent at least at one position. The substituent may be an alkyl, in particular an alkyl comprising 1 to 4 carbon atoms or an amino, azido or hydrazino group.

In an embodiment the ligand comprises at least two azole moieties, in particular two azole moieties or three azole moieties.

The linker may comprise 3 carbon atoms or at least one aromatic structure.

The ligand L may be selected from a group consisting of 1,4-di(tetrazol-1-yl)butane (1,1-dtb), 1,1'-(propane-1,2-diyl)bis(tetrazole) (1,1,-idtp), 4,4'-bi(1,2,4-triazole) (BTz), 1-methyltetrazole (1-MTZ), 2-methyl-5-aminotetrazole (2-MAT), 4-amino-1,2,4-triazole (4-ATRI), 1-methyl-5-aminotetrazole (1-MAT), 1,3-di(tetrazol-2-yl)propane (2,2-dtp), 1-(tetrazol-1-yl)-3-(tetrazol-2-yl)propane (1,2-dtp), 1,3-di(tetrazol-1-yl)propane (1,1-dtp), 1-ethyltetrazole (1-ETZ), 1-amino-1,2,3-triazole (1-ATRI), 1-amino-1,2,4-triazole (1A-1,2,4-TRI), 3,5-dimethyl-1,2,4-triazol-4-amine (admtrz), 3,5-di(pyridin-4-yl)-1,2,4-triazol-4-amine (4-abpt), 4-(1,2,4-triazol-4-yl)pyridine (2-ptrz), 5-(1-methylpyridin-1-ium-4-yl)-tetrazol-5-ide (mptz), 1,4-bis((1,2,4-triazol-1-yl)methyl)benzene (btix), 1H-tetrazol (TZ), 1-(1-(tetrazol-2-yl)propan-2-yl)-tetrazole (1,2-idtp), 2,2'-(propane-1,2-diyl)bis(tetrazole) (2,2-idtp), 1-(tetrazol-1-yl)-4-(tetrazol-2-yl)butane (1,2-dtb), 1,4-di(tetrazol-2-yl)butane (2,2-dtb), 1-isopropyltetrazole (1-iPTZ), 1-propyltetrazole (1-PTZ), 1-aminotetrazole (1-AT), 2-aminotetrazole (2-AT), 2-methyltetrazole (2-MTZ), 1,5-diaminotetrazole (1,5-DAT), 2,5-diaminotetrazole (2,5-DAT), (tetrazol-1-yl)methanol (HMTZ), 1,1'-(2-methylpropane-1,2-diyl)bis(tetrazole) (1,1-idtb), 1-(2-methyl-1-(tetrazol-2-yl)propan-2-yl)-tetrazole (1,2-idtb), 2,2'-(2-methylpropane-1,2-diyl)bis(tetrazole) (2,2-idtb), 3,4-diamino-1,2,4-triazole (DATRI), 3,4,5-triamino-1,2,4-triazole (TATRI), 4-methyl-1,2,4-triazole (MeTRI), 2-amino-1,2,3-triazole (2-ATRI), 1-(1,2,4-triazol-4-yl)-1,2,3-triazole (1,4-BTz), 1,4'-bi(1,2,4-triazole) (iBTz), 2-(1,2,4-triazol-4-yl)-1,2,3-triazole (2,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), para-phenylenbitetrazole (p-PBT), meta-phenylenbitetrazole (m-PBT), ortho-phenylenbitetrazole (o-PBT), tris(2-(tetrazol-1-yl)ethyl)amine (TETA), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(2-azidomethyl)-1H-tetrazole (AMT), 1-(2-azidoethyl)-1H-tetrazole (AET), 1-(3-azidopropyl)-1H-tetrazole (APT), 1-(4-azidobutyl)-1H-tetrazole (ABT), 1,2-(di-5-methylhydrazinotetrazol-1-yl)ethane (1,1-dmhte) and 3-hydrazino-4-amino-1,2,4-triazole (3-HATri).

In an embodiment L is neither 1,1-dte nor 2,2-dte nor 1,2-dte and the copper(II) azide complex is used as a primary explosive in a detonation mixture in an amount exceeding 75% by weight to an amount of 99% by weight, wherein the detonation mixture further comprises a stabilizing agent and/or a binding agent. Alternatively the copper(II) azide complex may be used as a primary explosive in an igniting mixture in an amount of 5% by weight to 75% by weight, in particular 5% by weight to 50% by weight, wherein the igniting mixture further comprises an oxidizing agent and a reducing agent and optionally a further energetic compound and/or a friction agent and/or a stabilizing agent and/or a binding agent and/or a sensibilizing agent. The oxidizing agent may comprise or consist of KNO₃, NH₄NO₃, Sr(NO₃)₂, Ba(NO₃)₂ and/or another nitrate, ZnO₂, BaO₂ and/or another peroxide, CaSO₄ and/or another sulfate, Fe₂O₃, Fe₃O₄, CeO₂, WO₃, SnO₂, SiO₂, MnO₂, KMnO₄, CuO, Bi₂O₃, KO₂ and/or another oxide, KClO₃ and/or another chlorate and/or KClO₄, NH₄ClO₄ and/or another perchlorate. The reducing agent may comprise or consist of Al, Mg, B, Zr, Ti, Si, Ce and/or another metal and/or an alloy thereof, a metal hydride and/or S₈, Sb₂S₃ and/or another sulfur containing compound. The further energetic compound is designated as further energetic compound because the copper(II) azide complex is considered as first energetic compound in the igniting mixture. The further energetic compound may comprise or consist of pentaerythritol tetranitrate (PETN), hexogen, octogen and/or nitrocellulose. The friction agent can comprise or consist of glass powder, Sb₂S₃, CaSi₂ and/or boron nitride. The stabilizing agent can comprise or consist of dextrin and/or graphite. The binding agent may comprise or consist of paraffin, dextrin, nitrocellulose, a polyacetate and/or a polyvinyl comprising compound and the sensibilizing agent can comprise or consist of tetrazene.

In the case wherein L is 1,1-dte, 2,2-dte or 1,2-dte the other reducing agents, the other oxidizing agent, the further reducing agent and the other energetic compound may be selected from the above mentioned reducing agents other than Al and Sb₂S₃, from the above mentioned oxidizing agents other than Ba(NO₃)₂, and from the above mentioned further energetic compound other than PETN.

In an specific embodiment the oxidizing agent is KNO₃, the reducing agent is boron and the further energetic compound is PETN. Alternatively the oxidizing agent is Ba(NO₃)₂, the reducing agent comprises Al and Sb₂S₃ and the further energetic compound is PETN. Both specific compositions may be with or without tetrazene.

In the case wherein L is 1,1-dte, 2,2-dte or 1,2-dte Al or the other reducing agent may be present in an amount of 6% by weight to 8% by weight, Ba(NO₃)₂ or the other oxidizing agent may be present in an amount of 27% by weight to 37% by weight, Sb₂S₃ or the further reducing agent may be present in an amount of 13% by weight to 17% by weight, pentaerythritol tetranitrate (PETN) or the other energetic compound may be present in an amount of 4% by weight to 6% by weight and the binding agent may be present in an amount of 0.1% by weight to 1% by weight in the mixture. A molar ratio of Al : Ba(NO₃)₂ : Sb₂S₃ : PETN in the mixture may be 2600 : 1200 : 400 : 158 or about 2600 : 1200 : 400 : 158.

The invention further concerns a copper(II) azide complex, wherein the copper(II) azide complex is Cu(N3)2(4-amino-1,2,4-triazole)2 or Cu₃(N₃)₆(4-amino-1,2,4-triazole)₂*H₂O or is of general formula Cuₐ(N₃)₂ₐ(L)ₓ, wherein L is a ligand, a = 1 to 6, in particular 1 to 5, in particular 1 to 4, and x = 1 to 6, wherein L is selected from a group consisting of 1,1'-(propane-1,2-diyl)bis(tetrazole) (1,1,-idtp), 4,4'-bi(1,2,4-triazole) (BTz), 1-methyltetrazole (1-MTZ), 2-methyl-5-aminotetrazole (2-MAT), 1-methyl-5-aminotetrazole (1-MAT), 1,3-di(tetrazol-2-yl)propane (2,2-dtp), 1-(tetrazol-1-yl)-3-(tetrazol-2-yl)propane (1,2-dtp), 1,3-di(tetrazol-1-yl)propane (1,1-dtp), 1-ethyltetrazole (1-ETZ), 1-amino-1,2,3-triazole (1-ATRI), 1-amino-1,2,4-triazole (1A-1,2,4-TRI), 1-(1-(tetrazol-2-yl)propan-2-yl)-tetrazole (1,2-idtp), 2,2'-(propane-1,2-diyl)bis(tetrazole) (2,2-idtp), 1-(tetrazol-1-yl)-4-(tetrazol-2-yl)butane (1,2-dtb), 1,4-di(tetrazol-2-yl)butane (2,2-dtb), 1-isopropyltetrazole (1-iPTZ), 1-propyltetrazole (1-PTZ), 1-aminotetrazole (1-AT), 2-aminotetrazole (2-AT), 2-methyltetrazole (2-MTZ), 1,5-diaminotetrazole (1,5-DAT), 2,5-diaminotetrazole (2,5-DAT), (tetrazol-1-yl)methanol (HMTZ), 1,1'-(2-methylpropane-1,2-diyl)bis(tetrazole) (1,1-idtb), 1-(2-methyl-1-(tetrazol-2-yl)propan-2-yl)-tetrazole (1,2-idtb), 2,2'-(2-methylpropane-1,2-diyl)bis(tetrazole) (2,2-idtb), 3,4-diamino-1,2,4-triazole (DATRI), 3,4,5-triamino-1,2,4-triazole (TATRI), 4-methyl-1,2,4-triazole (MeTRI), 2-amino-1,2,3-triazole (2-ATRI), 1-(1,2,4-triazol-4-yl)-1,2,3-triazole (1,4-BTz), 1,4'-bi(1,2,4-triazole) (iBTz), 2-(1,2,4-triazol-4-yl)-1,2,3-triazole (2,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), para-phenylenbitetrazole (p-PBT), meta-phenylenbitetrazole (m-PBT), ortho-phenylenbitetrazole(o-PBT), tris(2-(tetrazol-1-yl)ethyl)amine (TETA), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(2-azidomethyl)-1H-tetrazole (AMT), 1-(2-azidoethyl)-1H-tetrazole (AET), 1-(3-azidopropyl)-1H-tetrazole (APT), 1-(4-azidobutyl)-1H-tetrazole (ABT), 1,2-(di-5-methylhydrazinotetrazol-1-yl)ethane (1,1-dmhte) and 3-hydrazino-4-amino-1,2,4-triazole (3-HATri).

The invention further concerns a method for synthesizing a copper(II) azide complex, wherein the copper(II) azide complex is of general formula Cuₐ(N₃)₂ₐ(L)ₓ, wherein L is a ligand, a = 1 to 6, in particular 1 to 5, in particular 1 to 4, and x = 1 to 6, wherein a copper(II) salt and the ligand are dissolved in water, an alcohol, in particular methanol, ethanol or a propanol, or acetonitrile thus forming a first solution, an azide is dissolved in water, an alcohol, in particular methanol, ethanol or a propanol, or acetonitrile thus forming a second solution, wherein the first solution is agitated and the second solution is added to the first solution resulting in the precipitation of the copper(II) azide complex.

The copper(II) salt may be a chloride, a sulfate, a nitrate, an acetate, a perchlorate or a carbonate and/or the azide may be sodium azide, lithium azide, potassium azide or hydrazoic acid.

In an embodiment of the method the copper(II) azide complex is separated from the mixed first and second solutions. The separation may be performed by filtration and washing. Subsequently the separated copper(II) azide complex may be dried.

The invention further concerns a ligand for the formation of a copper(II) azide complex of general formula Cuₐ(N₃)₂ₐ(L)ₓ, wherein L is the ligand, a = 1 to 6, in particular 1 to 5, in particular 1 to 4, and x = 1 to 6, wherein the ligand is 1-(1-(tetrazol-2-yl)propan-2-yl)-tetrazole (1,2-idtp), 2,2'-(propane-1,2-diyl)bis(tetrazole) (2,2-idtp), 1-(2-methyl-1-(tetrazol-2-yl)propan-2-yl)-tetrazole (1,2-idtb), 2,2'-(2-methylpropane-1,2-diyl)bis(tetrazole) (2,2-idtb), 1-(1,2,4-triazol-4-yl)-1,2,3-triazole (1,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(3-azidopropyl)-1H-tetrazole (APT) or 1-(4-azidobutyl)-1H-tetrazole (ABT).

The following table shows possible ligands, complexes and molecular formula of specific ligands and corresponding copper(II) azide complexes according to the invention or that can be used according to the invention:

| Ligand | Complex | Molecular Formula |
|---|---|---|
| 1,1-dte | [Cu₂(N₃)₄(1,1-dte)] | C₄H₆Cu₂N₂₀ |
| 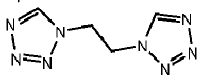 | | |
| 1,2-di(tetrazol-1-yl)ethane | | |
| C4H6N8 | | |
| 1,1-dtb | [Cu₂(N₃)₄(1,1-dtb)] | C₆H₁₀Cu₂N₂₀ |
| 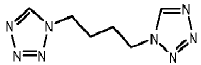 | | |
| 1,4-di(tetrazol-1-yl)butane | | |
| C6H10N8 | | |
| 1,1,-idtp | [Cu₂(N₃)₄(1,1-idtp)] | C₅H₈Cu₂N₂₀ |
| 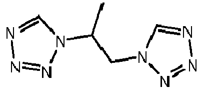 | | |
| 1,1'-(propane-1,2-diyl)bis(tetrazole) | | |
| C5H8N8 | | |
| BTz | 1. [Cu₂(N₃)₄(BTz)] | C₄H₄Cu₂N₁₈ |
| 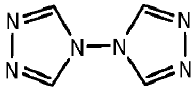 | | |
| 4,4'-bi(1,2,4-triazole) | 2. ([Cu(N₃)₂(BTz)]) | C₄H₄CUN₁₂ |
| C4H4N6 | | |
| 1-MTZ | [Cu(N₃)₂(1-MTZ)] | C₂H₄CuN₁₀ |
| 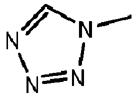 | | |
| 1-methyltetrazole | | |
| C2H4N4 | | |
| 2-MAT | [Cu₂(N₃)₄(2-MAT)] | C₂H₅Cu₂N₁₇ |
| 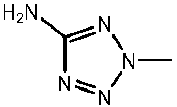 | | |
| 2-methyl-5-aminotetrazole | | |
| C2H5N5 | | |
| 4-ATRI | [Cu(N₃)₂(4-ATRI)₂)] | C₄H₈CuN₁₄ |
| 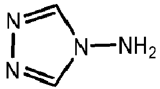 | | |
| 4-amino-1,2,4-triazole | | |
| C2H4N4 | | |
| 1-MAT | 1. [Cu3(N3)6(1-MAT)2)] | C₄H₁₀Cu₃N₂₈ |
| 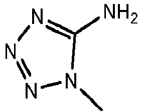 | | |
| 1-methyl-5-aminotetrazole | 2. ([Cu₃(N₃)₆(1-MAT)₄)] · H₂O) | C₈H₂₂Cu₃N₃₈O |
| C2H5N5 | | |
| 2,2-dte | [Cu₄(N₃)₈(2,2-dte)] | C₄H₆CU₄N₃₂ |
| 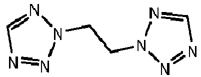 | | |
| 1,2-di(tetrazol-2-yl)ethane | | |
| C4H6N8 | | |
| 2,2-dtp | [Cu₄(N₃)₈(2,2-dtp)] | C₅H₈Cu₄N₃₂ |
| 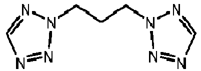 | | |
| 1,3-di(tetrazol-2-yl)propane | | |
| C5H8N8 | | |
| 1,2-dtp | [Cu₂(N₃)₄(1,2-dtp)] | C₅H₈Cu₂N₂₀ |
| 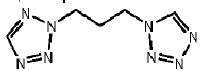 | | |
| 1-(tetrazol-1-yl)-3-(tetrazol-2-yl)propane | | |
| C5H8N8 | | |
| 1,1-dtp | [Cu₂(N₃)₄(1,1-dtp)] | C₅H₈Cu₂N₂₀ |
| 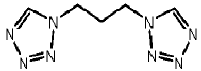 | | |
| 1,3-di(tetrazol-1-yl)propane | | |
| C5H8N8 | | |
| 1-ETZ | [Cu(N₃)₂(1-ETZ)] | C₃H₆CuN₁₀ |
| 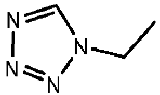 | | |
| 1-ethyltetrazole | | |
| C3H6N4 | | |
| 1-ATRI | [Cu(N₃)₂(1-ATRI)] | C₂H₄CuN₁₀ |
| 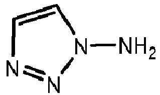 | | |
| 1-amino-1,2,3-triazole | | |
| C2H4N4 | | |
| 1A-1,2,4-TRI | [Cu₂(N₃)₄(1A-1,2,4-TRI)] | C₂H₄Cu₂N₁₆ |
| 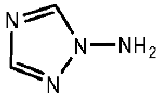 | | |
| 1-amino-1,2,4-triazole | | |
| C2H4N4 | | |
| ABTz | [Cu(N₃)₂(atrz)₃] | C₁₂H₁₂CuN₃₀ |
| 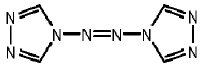 | | |
| 1,2-di(1,2,4-triazol-4-yl)diazene | | |
| C4H4N8 | | |
| admtrz | 1. [Cu₃(N₃)₆(admtrz)₄] | 1. C₁₆H₃₂CU₃N₃₄ |
| 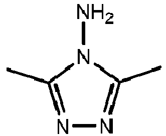 | | |
| 3,5-dimethyl-1,2,4-triazol-4-amine | 2.([Cu₂(N₃)₄(admtrz)₂]) | 2.C₈H₁₆Cu₂N₂₀ |
| C4H8N4 | | |
| 4-abpt | [Cu(N₃)₂(4-abpt)] · 2 H₂O | C₁₂H₁₄CuN₁₂O₂ |
| 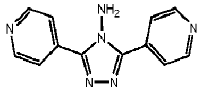 | | |
| 3,5-di(pyridin-4-yl)-1,2,4-triazol-4-amine | | |
| C12H10N6 | | |
| 2-ptrz | [Cu₃(N₃)₆(2-ptrz)₂] | C₁₄H₁₂Cu₃N₂₆ |
| 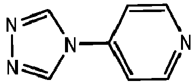 | | |
| 4-(1,2,4-triazol-4-yl)pyridine | | |
| C7H6N4 | | |
| mptz | [Cu(N₃)₂(mptz)] | C₇H₇CuN₁₁ |
| 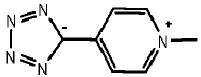 | | |
| 5-(1-methylpyridin-1-ium-4-yl)-tetrazol-5-ide | | |
| C7H7N5 | | |
| btix | [Cu(N₃)₂(btix)₂] | C₂₄H₂₄CuN₁₈ |
| 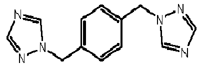 | | |
| 1,4-bis((1,2,4-triazol-1-yl)methyl)benzene | | |
| C12H12N6 | | |
| TZ | [Cu(N₃)(TZ)] | CH₂CuN₇ |
| 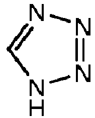 | | |
| 1 H-tetrazol | | |
| CH2N4 | | |
| 1,2-idtp | [Cu₂(N₃)₄(1,2-idtp)] | C₅H₈Cu₂N₂₀ |
| 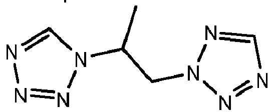 | | |
| 1-(1-(tetrazol-2-yl)propan-2-yl)-tetrazole | | |
| C5H8N8 | | |
| 2,2-idtp | [Cu₄(N₃)₈(2,2-idtp)] | C₅H₈Cu₄N₃₂ |
| 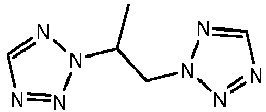 | | |
| 2,2'-(propane-1,2-diyl)bis(tetrazole) | | |
| C5H8N8 | | |
| 1,2-dte | [Cu₂(N₃)₄(1,2-dte)] | C₄H₆Cu₂N₂₀ |
| 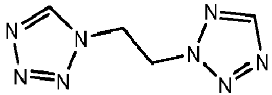 | | |
| 1-(tetrazol-1-yl)-2-(tetrazol-2-yl)ethane | | |
| C4H6N8 | | |
| 1,2-dtb | [Cu₂(N₃)₄(1,2-dtb)] | C₆H₁₀Cu₂N₂₀ |
| 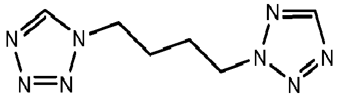 | | |
| 1-(tetrazol-1-yl)-4-(tetrazol-2-yl)butane | | |
| C6H10N8 | | |
| 2,2-dtb | [Cu₄(N₃)₈(2,2-dtb)] | C6H₁₀CU₄N₃₂ |
| 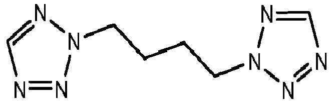 | | |
| 1,4-di(tetrazol-2-yl)butane | | |
| C6H10N8 | | |
| 1-iPTZ | [Cu(N₃)₂(1-iPTZ)] | C₄H₈CuN₁₀ |
| 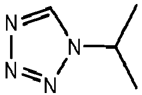 | | |
| 1-isopropyltetrazole | | |
| C4H8N4 | | |
| 1-PTZ | [Cu(N₃)₂(1-PTZ)] | C₄H₈CuN₁₀ |
| 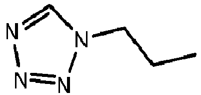 | | |
| 1-propyltetrazole | | |
| C4H8N4 | | |
| 1-AT | [Cu(N₃)₂(1-AT)] | CH₃CuN₁₁ |
| 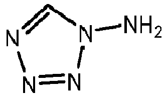 | | |
| 1-aminotetrazole | | |
| CH3N5 | | |
| 2-AT | [Cu₂(N₃)₄(2-AT)] | CH₃Cu₂N₁₇ |
| 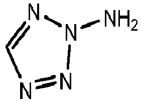 | | |
| 2-aminotetrazole | | |
| CH3N5 | | |
| 2-MTZ | [Cu₂(N₃)₄(2-MTZ)] | C₂H₄Cu₂N₁₆ |
| 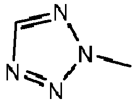 | | |
| 2-methyltetrazole | | |
| C2H4N4 | | |
| 1,5-DAT | [Cu₂(N₃)₄(1,5-DAT)] | CH₄Cu₂N₁₈ |
| 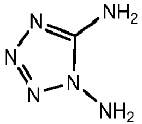 | | |
| 1,5-diaminotetrazole | | |
| CH4N6 | | |
| 2,5-DAT | [Cu₂(N₃)₄(2,5-DAT)] | CH₄Cu₂N₁₈ |
| 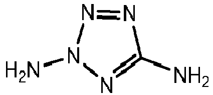 | | |
| 2,5-diaminotetrazole | | |
| CH4N6 | | |
| HMTZ | [Cu(N₃)₂(HMTZ)] | C₂H₄CuN₁₀O |
| 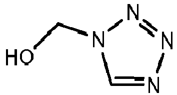 | | |
| (tetrazol-1-yl)methanol | | |
| C2H4N4O | | |
| 1,1-idtb | [Cu₂(N₃)₄(1,1-idtb)] | C₆H₁₀Cu₂N₂₀ |
| 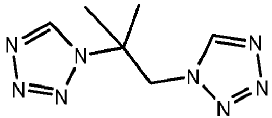 | | |
| 1,1'-(2-methylpropane-1,2-diyl)bis(tetrazole) | | |
| C6H10N8 | | |
| 1,2-idtb | [Cu₂(N₃)₄(1,2-idtb)] | C₆H₁₀Cu₂N₂₀ |
| 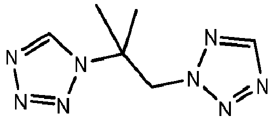 | | |
| 1-(2-methyl-1-(tetrazol-2-yl)propan-2-yl)-tetrazole | | |
| C6H10N8 | | |
| 2,2-idtb | [Cu₄(N₃)₈(2,2-idtb)] | C₆H₁₀Cu₄N₃₂ |
| 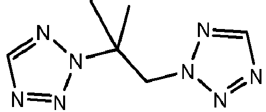 | | |
| 2,2'-(2-methylpropane-1,2-diyl)bis(tetrazole) | | |
| C6H10N8 | | |
| DATRI | [Cu₂(N₃)₄(DATRI)] | C₂H₅Cu₂N₁₇ |
| 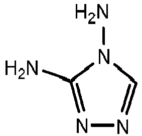 | | |
| 3,4-diamino-1,2,4-triazole | | |
| C2H5N5 | | |
| TATRI | [Cu₂(N₃)₄(TATRI)] | C₂H₆Cu₂N₁₈ |
| 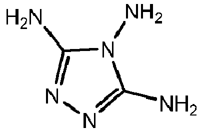 | | |
| 3,4,5-triamino-1,2,4-triazole | | |
| C2H6N6 | | |
| MeTRI | [Cu₂(N₃)₄(MeTRI)] | C₃H₅Cu₂N₁₅ |
| 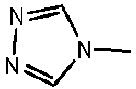 | | |
| 4-methyl-1,2,4-triazole | | |
| C3H5N3 | | |
| 2-ATRI | [Cu(N₃)₂(2-ATRI)] | C₂H₄CuN₁₀ |
| 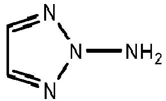 | | |
| 2-amino-1,2,3-triazole | | |
| C2H4N4 | | |
| 1,4-BTz | [Cu₂(N₃)₄(1,4-BTz)] | C₄H₄Cu₂N₁₈ |
| 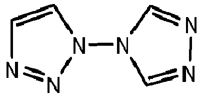 | | |
| 1-(1,2,4-triazol-4-yl)-1,2,3-triazole | | |
| C4H4N6 | | |
| iBTz | [Cu₂(N₃)₄(iBTz)] | C₄H₄Cu₂N₁₈ |
| 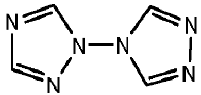 | | |
| 1,4'-bi(1,2,4-triazole) | | |
| C4H4N6 | | |
| 2,4-BTz | [Cu₂(N₃)₄(2,4-BTz)] | C₄H₄Cu₂N₁₈ |
| 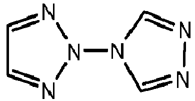 | | |
| 2-(1,2,4-triazol-4-yl)-1,2,3-triazole | | |
| C4H4N6 | | |
| MeTRITZ | [Cu₂(N₃)4(MeTRITZ)] | C₄H₅Cu₂N₁₉ |
| 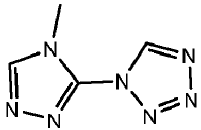 | | |
| 1-(4-methyl-1,2,4-triazol-3-yl)-tetrazole | | |
| C4H5N7 | | |
| AMeTRITZ | [Cu₂(N₃)₄(AMe TRITZ)] | C₄H₆Cu₂N₂₀ |
| 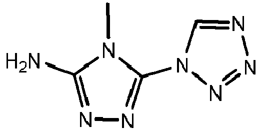 | | |
| 4-methyl-5-(tetrazol-1-yl)-1,2,4-triazol-3-amine | | |
| C4H6N8 | | |
| p-PBT | [Cu₂(N₃)₄(p-PBT)] | C₈H₆Cu₂N₂₀ |
| 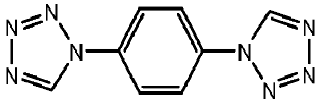 | | |
| para-phenylenbitetrazole | | |
| C8H6N8 | | |
| m-PBT | [Cu₂(N₃)4(m-PBT)] | C₈H₆Cu₂N₂₀ |
| 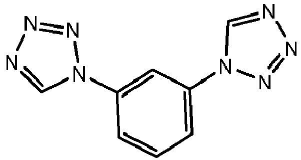 | | |
| meta-phenylenbitetrazole | | |
| C8H6N8 | | |
| o-PBT | [Cu₂(N₃)₄(o-PBT)] | C₈H₆Cu₂N₂₀ |
| 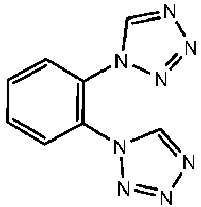 | | |
| ortho-phenylenbitetrazole | | |
| C8H6N8 | | |
| TETA | [Cu₃(N₃)₆(TETA)] | C₉H₁₅CU₃N₃₁ |
| 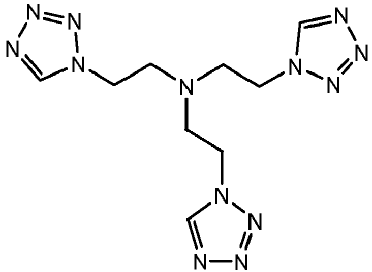 | | |
| tris(2-(tetrazol-1-yl)ethyl)amine | | |
| C9H15N13 | | |
| 1,1-dtm | [Cu₂(N₃)₄(1,1-dtm)] | C₃H₄Cu₂N₂₀ |
| 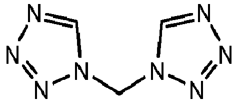 | | |
| di(1 H-tetrazol-1-yl)methane | | |
| C3H4N8 | | |
| 1,2-dtm | [Cu₂(N₃)₄(1,2-dtm)] | C₃H₄Cu₂N₂₀ |
| 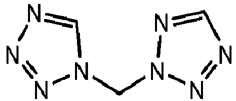 | | |
| 1-((2H-tetrazol-2-yl)methyl)-1H-tetrazole | | |
| C3H4N8 | | |
| 2,2-dtm | [Cu₂(N₃)₄(2,2-idtm)] | C₃H₄Cu₂N₂₀ |
| 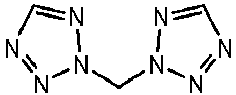 | | |
| di(2H-tetrazol-2-yl)methane | | |
| C3H4N8 | | |
| AMT | [Cu₂(N₃)₄(AMT)] | C₃H₅Cu₂N₁₉ |
| 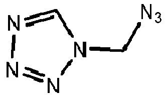 | | |
| 1-(2-azidomethyl)-1 H-tetrazole | | |
| C2H3N7 | | |
| AET | [Cu₂(N₃)₄(AET)] | C₂H₃Cu₂N₁₉ |
| 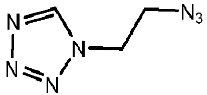 | | |
| 1-(2-azidoethyl)-1 H-tetrazole | | |
| C3H5N7 | | |
| 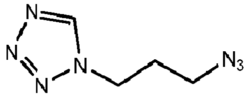 APT | [Cu₂(N₃)₄(APT)] | C₄H₇Cu₂N₁₉ |
| 1-(3-azidopropyl)-1 H-tetrazole | | |
| C4H7N7 | | |
| ABT | [Cu₂(N₃)₄(ABT)] | C₅H₉Cu₂N₁₉ |
| 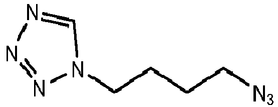 | | |
| 1-(4-azidobutyl)-1 H-tetrazole | | |
| C5H9N7 | | |
| 1,1-dmhte | [Cu₂(N₃)₄(1, 1-dmhte)] | C₆H₁₄Cu₂N₂₈ |
| 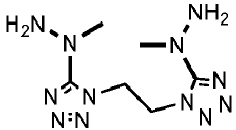 | | |
| 1,2-(di-5-methylhydrazinotetrazol-1-yl)ethane | | |
| C6H14N12 | | |
| 3-HATri | [Cu(N₃)₂(3-HATRI)] | C₂H₆CuN₁₂ |
| 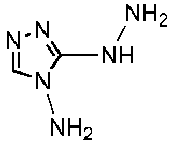 | | |
| 3-hydrazino-4-amino-1,2,4-triazole | | |
| C2H6N6 | | |

In the following the invention is described by way of examples.

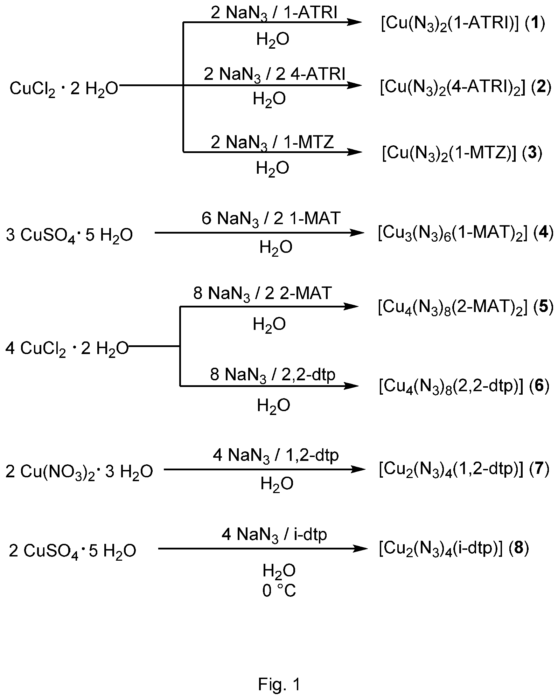

Fig. 1 shows schematically syntheses of a copper(II) azide complex comprising the following ligands: 1-ATRI: 1-amino-1,2,3-triazole; 4-ATRI: 4-amino-1,2,4-triazole; 1-MTZ: 1-methyltetrazole; 1-MAT: 1-methyl-5-aminotetrazole; 2-MAT: 2-methyl-5-aminotetrazole; 1,2-dtp: 1-(tetrazol-1-yl)-3-(tetrazol-2-yl)propane; 2,2-dtp: 1,3-di(tetrazol-2-yl)propane; i-dtp: 1,1'-(propane-1,2-diyl)bis(tetrazole).

Some of the ligands are commercially available, e. g. from the following sources:
1-ATRI: https://www.abcr.de/shop/de/1H-1-2-3-Triazol-1-amine-707315.html/
4-ATRI: http://www.tcichemicals.com/eshop/de/de/commodity/A1137/
1-MTZ: https://www.abcr.de/shop/de/1-Methyl-1H-tetrazole-97-410116.html/
1-MAT: https://www.abcr.de/shop/de/1-Methyl-1H-tetrazol-5-amine-98.html/
2-MAT: https://www.abcr.de/shop/de/5-Amino-2-methyl-2H-tetrazole-98-499286.html/

All chemicals and solvents were employed as received (Sigma-Aldrich, Fluka, Acros, ABCR). ¹H and ¹³C NMR spectra were recorded with neat solids as samples at ambient temperature using a JEOL Eclipse 270, JEOL EX 400 or a JEOL Eclipse 400 instrument. The chemical shifts quoted in ppm in the text refer to typical standards such as tetramethylsilane (¹H, ¹³C). Dehydration, melting and decomposition temperatures of the described compounds were measured through differential thermal analysis (DTA) with an OZM Research DTA 552-Ex instrument. The samples were measured in a range of 25-400 °C at a heating rate of 5 °C min⁻¹. Infrared spectra were measured with pure samples on a Perkin-Elmer BXII FT-IR system with a Smith DuraSampler IR II diamond ATR. Determination of the carbon, hydrogen, nitrogen and sulfur contents was carried out by combustion analysis using an Elementar Vario El (nitrogen values determined are often lower than the calculated ones due to their explosive behavior). UV-Vis spectra were recorded in the solid state using a Varian Cary 500 spectrometer in the wavelength range of 350-1000 nm. Impact sensitivity tests were carried out according to STANAG 4489¹ modified instruction² using a BAM (Bundesanstalt für Materialforschung) drophammer.³ Friction sensitivity tests were carried out according to STANAG 4487⁴ modified instruction⁵ using the BAM friction tester. The classification of the tested compounds results from the "UN Recommendations on the Transport of Dangerous Goods".⁶ Additionally all compounds were tested upon the sensitivity toward electrical discharge using the Electric Spark Tester ESD 2010 EN.⁷ All the obtained coordination compounds were washed with water, dried overnight in air and used for analytics without further purification.

### General procedure for the preparation of complexes 1 to 8:

The numbering of complexes 1 to 8 is according to Fig. 1. Stoichiometric amounts for the theoretical synthesis of 0.25 mmol of the coordination compounds were used. Copper(II) chloride dihydrate (**1-3, 5**), copper(II) sulfate pentahydrate (**4, 8**) or copper(II) nitrate trihydrate (**7)** and the ligand were stirred mechanically in 7 mL water, the corresponding quantity of sodium azide, dissolved in 1 mL water, was added dropwise within 1 min and the suspension was stirred for 15 min. The precipitated complex compounds were filtered off, washed with water (3 x 2 mL) and dried in air.

Single crystals growth of **1, 3, 4** and **6-8** were achieved by overlaying an aqueous solution (8 mL) of sodium azide and the ligand with an ethanolic solution (8 mL) of copper(II) chloride dihydrate, separated by a mixture (4 mL) of water/ethanol (50/50). After 7 to 14 days crystals suitable for X-ray determination were obtained.

### [Cu(N₃)₂(1-ATRI)] (1)

Complex compound **1** was obtained as dark brown precipitate. Yield: 46.8 mg (0.20 mmol, 81 %).
DTA (5 °C min⁻¹) onset: 123 °C (dec.); IR (ATR, cm⁻¹): *ṽ*= 3326 (w), 3267 (w), 3164 (vw), 3148 (vw), 2102 (vs), 2069 (vs), 1621 (w), 1509 (vw), 1483 (vw), 1469 (vw), 1336 (w), 1286 (w), 1264 (m), 1239 (vw), 1174 (vw), 1138 (m), 1079 (w), 1045 (vw), 983 (m), 967 (w), 864 (vw), 785 (m), 776 (m), 701 (w), 674 (w), 650 (w), 629 (vw), 600 (w), 591 (w); EA (C₂H₄CuN₁₀, 231.67): calcd: C 10.37, H 1.74, N 60.46 %; found: C 10.40, H 1.81, N 56.77 %; BAM drophammer: 3 J; friction tester: < 5 N; ESD: 5 mJ (at grain size < 100 µm).

### [Cu(N₃)₂(4-ATRI)₂] (2)

From the reaction mixture, product **2** could be isolated as a green powder. Yield: 60.5 mg (0.19 mmol, 77 %). Slow evaporation of the mother liquor gave green needle-like crystals within 10 days suitable for X-ray determination.
DTA (5 °C min⁻¹) onset: 161 °C (dec.); IR (ATR, cm⁻¹): *ṽ*= 3321 (w), 3223 (w), 3123 (w), 3090 (w), 3036 (w), 2975 (w), 2058 (s), 1803 (w), 1711 (w), 1621 (w), 1530 (w), 1463 (w), 1386 (w), 1349 (w), 1319 (w), 1289 (w), 1220 (m), 1192 (w), 1102 (vw), 1066 (m), 1030 (w), 962 (s), 906 (m), 860 (m), 681 (w), 670 (vw), 647 (w), 619 (vs), 607 (m); EA (C₄H₈CuN₁₄, 315.75): calcd: C 15.22, H 2.55, N 62.10 %; found: C 15.46, H 2.60, N 59.57 %; BAM drophammer: 10 J; friction tester: > 360 N; ESD: 300 mJ (at grain size < 100 µm).

### [Cu(N₃)₂(1-MTZ)] (3)

The copper(II) azide complex **3** was received as a brown solid. Yield: 47.2 mg (0.20 mmol, 81 %).
DTA (5 °C min⁻¹) onset: 157 °C (dec.); IR (ATR, cm⁻¹): *ṽ*= 3120 (w), 2075 (s), 2045 (vs), 1814 (w), 1570 (vw), 1522 (w), 1476 (w), 1424 (w), 1344 (w), 1297 (w), 1284 (m), 1177 (m), 1107 (m), 1066 (w), 1022 (w), 1000 (m), 912 (w), 716 (vw), 682 (m), 656 (m), 604 (w); EA (C₂H₄CuN₁₀, 231.67): calcd: C 10.37, H 1.74, N 60.46 %; found: C 10.59, H 1.95, N 58.05 %; BAM drophammer: 1 J; friction tester: < 5 N; ESD: 20 mJ (at grain size < 100 µm).

### [Cu₄(N₃)₈(2-MAT)₂] (5)

Complex **5** was obtained as a brown precipitate. Yield: 164 mg (0.21 mmol, 83 %). Suitable crystals in the form of red rods for X-ray diffraction were picked directly out of the reaction mixture.
DTA (5 °C min⁻¹) onset: 161 °C (dec.); IR (ATR, cm⁻¹): *ṽ* = 3415 (m), 3338 (m), 3291 (w), 3245 (w), 3182 (w), 2102 (vs), 2053 (s), 2036 (s), 1634 (s), 1554 (m), 1439 (w), 1425 (m), 1416 (w), 1376 (w), 1352 (w), 1326 (w), 1294 (m), 1266 (m), 1193 (m), 1128 (w), 1105 (w), 1070 (w), 1022 (w), 901 (w), 812 (m), 751 (w), 694 (w), 675 (w), 648 (m); EA (C₄H₁₀Cu₄N₃₆, 788.55) calc.: C 6.09, H 1.28, N 60.39 %; found: C 6.67, H 1.58, N 57.57 %; BAM drophammer: < 1 J; friction tester: < 5 N; ESD: 13 mJ (at grain size < 100 µm).

### [Cu₄(N₃)₈(2,2-dtp)] (6)

Compound **6** was received as a brown solid. Yield: 151 mg (0.20 mmol, 78 %).
DTA (5 °C min⁻¹) onset: 195 °C (dec.); IR (ATR, cm⁻¹): *ṽ*= 3143 (w), 2121 (vs), 2096 (vs), 2056 (s), 2044 (m), 2005 (w), 1573 (w), 1465 (w), 1444 (w), 1386 (w), 1349 (w), 1304 (w), 1278 (m), 1201 (w), 1167 (w), 1158 (vw), 1141 (w), 1083 (vw), 1053 (w), 1017 (w), 962 (w), 910 (w), 848 (w), 758 (vw), 694 (m), 680 (w), 650 (w), 589 (w), 577 (w); EA (C₃H₁₀Cu₄N₃₂, 770.53): calcd: C 7.79, H 1.05, N 58.17 %; found: -; BAM drophammer: 1 J; friction tester: < 5 N; ESD: 5 mJ (at grain size < 100 µm).

### [Cu₂(N₃)₄(1,2-dtp)] (7)

Product **7** precipitated as a brown powder out of the mother liquor. Yield: 103 mg (0.22 mmol, 86 %).
DTA (5 °C min⁻¹) onset: 146 °C (dec.); IR (ATR, cm⁻¹): *ṽ*= 3151 (w), 3126 (vw), 2088 (s), 2046 (vs), 1572 (vw), 1500 (w), 1466 (vw), 1451 (w), 1439 (w), 1379 (w), 1356 (w), 1339 (w), 1292 (m), 1205 (w), 1183 (w), 1167 (w), 1147 (w), 1103 (w), 1083 (vw), 1054 (vw), 1039 (vw), 1025 (w), 1003 (vw), 983 (m), 908 (w), 899 (w), 872 (vw), 829 (w), 700 (m), 685 (w), 662 (m), 642 (w), 601 (w), 586 (w); EA (C₅H₈Cu₂N₂₀, 475.35): calcd: C 12.63, H 1.70, N 58.93 %; found: C 13.14, H 1.85, N 57.93 %; BAM drophammer: 3 J; friction tester: < 5 N; ESD: 18 mJ (at grain size < 100 µm).

### [Cu2(N3)4(i-dtp)] (8)

Azide complex **8** was isolated as a brown precipitate. Yield: 84.8 mg (0.18 mmol, 71 %).
DTA (5 °C min⁻¹) onset: 165 °C (dec.); IR (ATR, cm⁻¹): *ṽ*= 3362 (vw), 3318 (vw), 3100 (w), 3012 (vw), 2976 (vw), 2089 (s), 2072 (s), 2041 (vs), 1825 (vw), 1498 (w), 1464 (w), 1444 (w), 1397 (w), 1372 (vw), 1345 (w), 1281 (m), 1202 (w), 1182 (m), 1124 (w), 1107 (w), 1091 (m), 1054 (vw), 1041 (w), 1005 (m), 911 (w), 792 (vw), 715 (vw), 681 (m), 666 (m), 602 (w), 589 (w); EA (C₅H₈Cu₂N₂₀, 475.35): calcd: C 12.63, H 1.70, N 58.93 %; found: C 13.14, H 1.80, N 57.90 %; BAM drophammer: 2 J; friction tester: < 5 N; ESD: 5 mJ (at grain size < 100 µm).

### General procedure applicable for the synthesis of N1-substituted tetrazoles exemplarily described for 1,4-di(tetrazol-1-yl)butane (1,1-dtb):

The ligand 1,1-dtb has been synthesized with slight modifications according to the literature procedure of Kamiya and Saito⁸: 1,4-diamino-butane (1.76 g, 0.02 mol) and sodium azide (1.76 g, 0.02 mol) have been suspended in triethyl orthoformate (30 g, 0.20 mol) and afterwards treated with glacial acetic acid (40 mL) under stirring. After heating the reaction mixture overnight at 75 °C, the solvent has been removed and the remaining residue was washed with cold water. After filtration of the water, the solid was recrystallized from methanol yielding plate shaped colorless crystals.

A general procedure applicable for the synthesis of tetrazoles is also known from P. N. Gaponik, V. P. Karavai, Y. V. Grigor'ev, Khim. Geterotsikl. Soedin. 1985, 11, 1521-1524.

### References

¹ NATO standardization agreement (STANAG) on explosives, impact sensitivity tests, no. 4489, 1 st ed., Sept. 17, 1999**.**
² WIWEB-Standardarbeitsanweisung 4-5.1.02, Ermittlung der Explosionsgefahrlichkeit, hier der Schlagempfindlichkeit mit dem Fallhammer, Nov. 8, 2002**.**
³ http://www.bam.de Accessed September 2017.
⁴ NATO standardization agreement (STANAG) on explosive, friction sensitivity tests, no. 4487, 1st ed., Aug. 22, 2002**.**
⁵ WIWEB-Standardarbeitsanweisung 4-5.1.03, Ermittlung der Explosionsgefahrlichkeit oder der Reibeempfindlichkeit mit dem Reibeapparat, Nov. 8, 2002**.**
⁶ Impact: insensitive > 40 J, less sensitive ≥ 35 J, sensitive ≥ 4 J, very sensitive ≤ 3 J; Friction: insensitive > 360 N, less sensitive = 360 N, sensitive < 360 N and > 80 N, very sensitive ≤ 80 N, extremely sensitive < 10 N. According to the UN Recommendations on the Transport of Dangerous Goods, (+) indicates not safe for transport.
⁷ http://www.ozm.cz Accessed September 2017.
⁸ T. Kamiya and Y. Saito, Ger. Offen., 2147023, 1973.

## Claims

1. Use of a copper(II) azide complex as a primary explosive, wherein the copper(II) azide complex is of general formula Cuₐ(N₃)₂ₐ(L)ₓ, wherein L is a ligand, a = 1 to 6 and x = 1 to 6,
- wherein L consists of an azole or comprises at least one azole moiety, wherein in case of presence of more than one azole moiety the azole moieties are directly linked, linked via a single carbon, single nitrogen or single oxygen atom or linked via a carbon atoms comprising linker which linker comprises at least 3 carbon atoms or at least one aromatic structure
or
- wherein L comprises more than one azole moiety, wherein the azole moieties are linked via a linker which linker comprises or consists of at least 3 nitrogen atoms or comprises at least 2 carbon atoms and one oxygen atom
or
- wherein L comprises more than one azole moiety, wherein the azole moieties are linked via a linker which linker comprises 2 carbon atoms or comprises or consists of 2 nitrogen atoms, wherein at least one of the azole moieties is substituted
or
- wherein L is 1,2-di(tetrazol-1-yl)ethane (1,1-dte), 1,2-di(tetrazol-2-yl)ethane (2,2-dte) or 1-(tetrazol-1-yl)-2-(tetrazol-2-yl)ethane (1,2-dte), a = 2 and the copper(II) azide complex is contained in a mixture consisting of 5% by weight to 25% by weight of the copper(II) azide complex and for the rest of Al or another reducing agent, Ba(NO₃)₂ or another oxidizing agent, Sb₂S₃ or a further reducing agent, pentaerythritol tetranitrate (PETN) or another energetic compound and a binding agent, wherein tetrazene is not present in the mixture
or
- wherein L is 1,2-di(tetrazol-1-yl)ethane (1,1-dte), 1,2-di(tetrazol-2-yl)ethane (2,2-dte) or 1-(tetrazol-1-yl)-2-(tetrazol-2-yl)ethane (1,2-dte), a = 2 and the copper(II) azide complex is contained in a mixture consisting of 90% by weight to 99% by weight of the copper(II) azide complex and for the rest of a binding agent.

2. Use according to claim 1, wherein the azole, the azole moiety, the azole moieties or at least one of the azole moieties is/are substituted by a substituent at least at one position.

3. Use according to claim 2, wherein the substituent is an alkyl particular an alkyl comprising 1 to 4 carbon atoms or an amino, azido or hydrazino group

4. Use according to any of the preceding claims, wherein the ligand comprises at least two azole moieties, in particular two azole moieties or three azole moieties.

5. Use according to any of the preceding claims, wherein the linker comprises 3 carbon atoms or at least one aromatic structure.

6. Use according to any of the preceding claims, wherein L is selected from a group consisting of 1,4-di(tetrazol-1-yl)butane (1,1-dtb), 1,1'-(propane-1,2-diyl)bis(tetrazole) (1,1,-idtp), 4,4'-bi(1,2,4-triazole) (BTz), 1-methyltetrazole (1-MTZ), 2-methyl-5-aminotetrazole (2-MAT), 4-amino-1,2,4-triazole (4-ATRI), 1-methyl-5-aminotetrazole (1-MAT), 1,3-di(tetrazol-2-yl)propane (2,2-dtp), 1-(tetrazol-1-yl)-3-(tetrazol-2-yl)propane (1,2-dtp), 1,3-di(tetrazol-1-yl)propane (1,1-dtp), 1-ethyltetrazole (1-ETZ), 1-amino-1,2,3-triazole (1-ATRI), 1-amino-1,2,4-triazole (1A-1,2,4-TRI), 3,5-dimethyl-1,2,4-triazol-4-amine (admtrz), 3,5-di(pyridin-4-yl)-1,2,4-triazol-4-amine (4-abpt), 4-(1,2,4-triazol-4-yl)pyridine (2-ptrz), 5-(1-methylpyridin-1-ium-4-yl)-tetrazol-5-ide (mptz), 1,4-bis((1,2,4-triazol-1-yl)methyl)benzene (btix), 1H-tetrazol (TZ), 1-(1-(tetrazol-2-yl)propan-2-yl)-tetrazole (1,2-idtp), 2,2'-(propane-1,2-diyl)bis(tetrazole) (2,2-idtp), 1-(tetrazol-1-yl)-4-(tetrazol-2-yl)butane (1,2-dtb), 1,4-di(tetrazol-2-yl)butane (2,2-dtb), 1-isopropyltetrazole (1-iPTZ), 1-propyltetrazole (1-PTZ), 1-aminotetrazole (1-AT), 2-aminotetrazole (2-AT), 2-methyltetrazole (2-MTZ), 1,5-diaminotetrazole (1,5-DAT), 2,5-diaminotetrazole (2,5-DAT), (tetrazol-1-yl)methanol (HMTZ), 1,1'-(2-methylpropane-1,2-diyl)bis(tetrazole) (1,1-idtb), 1-(2-methyl-1-(tetrazol-2-yl)propan-2-yl)-tetrazole (1,2-idtb), 2,2'-(2-methylpropane-1,2-diyl)bis(tetrazole) (2,2-idtb), 3,4-diamino-1,2,4-triazole (DATRI), 3,4,5-triamino-1,2,4-triazole (TATRI), 4-methyl-1,2,4-triazole (MeTRI), 2-amino-1,2,3-triazole (2-ATRI), 1-(1,2,4-triazol-4-yl)-1,2,3-triazole (1,4-BTz), 1,4'-bi(1,2,4-triazole) (iBTz), 2-(1,2,4-triazol-4-yl)-1,2,3-triazole (2,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), para-phenylenbitetrazole (p-PBT), meta-phenylenbitetrazole (m-PBT), ortho-phenylenbitetrazole (o-PBT), tris(2-(tetrazol-1-yl)ethyl)amine (TETA), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(2-azidomethyl)-1H-tetrazole (AMT), 1-(2-azidoethyl)-1H-tetrazole (AET), 1-(3-azidopropyl)-1H-tetrazole (APT), 1-(4-azidobutyl)-1H-tetrazole (ABT), 1,2-(di-5-methylhydrazinotetrazol-1-yl)ethane (1,1-dmhte) and 3-hydrazino-4-amino-1,2,4-triazole (3-HATri).

7. Use according to any of the preceding claims, wherein L is neither 1,1-dte nor 2,2-dte nor 1,2-dte and the copper(II) azide complex is used as a primary explosive in a detonation mixture in an amount exceeding 75% by weight to an amount of 99% by weight, wherein the detonation mixture further comprises a stabilizing agent and/or a binding agent or wherein the copper(II) azide complex is used as a primary explosive in an igniting mixture in an amount of 5% by weight to 75% by weight, wherein the igniting mixture further comprises an oxidizing agent and a reducing agent and optionally a further energetic compound and/or a friction agent and/or a stabilizing agent and/or a binding agent and/or a sensibilizing agent.

8. Use according to claim 7, wherein the oxidizing agent comprises or consists of KNO₃, NH₄NO₃, Sr(NO₃)₂, Ba(NO₃)₂ and/or another nitrate, ZnO2, BaO2 and/or another peroxide, CaSO₄ and/or another sulfate, Fe₂O₃, Fe₃O₄, CeO₂, WO₃, SnO₂, SiO₂, MnO₂, KMnO₄, CuO, Bi₂O₃, KO₂ and/or another oxide, KClO₃ and/or another chlorate and/or KClO₄, NH₄ClO₄ and/or another perchlorate, the reducing agent comprises or consists of Al, Mg, B, Zr, Ti, Si, Ce and/or another metal and/or an alloy thereof, a metal hydride and/or S₈, Sb₂S₃ and/or another sulfur containing compound, the further energetic compound comprises or consists of pentaerythritol tetranitrate (PETN), hexogen, octogen and/or nitrocellulose, the friction agent comprises or consists of glass powder, Sb₂S₃, CaSi₂ and/or boron nitride, the stabilizing agent comprises or consists of graphite, the binding agent comprises or consists of paraffin, dextrin, nitrocellulose, a polyacetate and/or a polyvinyl comprising compound and the sensibilizing agent comprises or consists of tetrazene.

9. Use according to claim 7 or 8, wherein the oxidizing agent is KNO₃, the reducing agent is boron and the further energetic compound is pentaerythritol tetranitrate (PETN) or wherein the oxidizing agent is Ba(NO₃)₂, the reducing agent comprises Al and Sb₂S₃, the further energetic compound is pentaerythritol tetranitrate (PETN).

10. Use according to claim 1, wherein Al or the other reducing agent is present in an amount of 6% by weight to 8% by weight, Ba(NO₃)₂ or the other oxidizing agent is present in an amount of 27% by weight to 37% by weight, Sb₂S₃ or the further reducing agent is present in an amount of 13% by weight to 17% by weight, pentaerythritol tetranitrate (PETN) or the other energetic compound is present in an amount of 4% by weight to 6% by weight and the binding agent is present in an amount of 0.1% by weight to 1% by weight in the mixture.

11. Copper(II) azide complex, wherein the copper(II) azide complex is Cu(N3)2(4-amino-1,2,4-triazole)2 or Cu₃(N₃)₆(4-amino-1,2,4-triazole)₂*H₂O or is of general formula Cuₐ(N₃)₂ₐ(L)ₓ, wherein L is a ligand, a = 1 to 6 and x = 1 to 6, wherein L is selected from a group consisting of 1,1'-(propane-1,2-diyl)bis(tetrazole) (1,1,-idtp), 4,4'-bi(1,2,4-triazole) (BTz), 1-methyltetrazole (1-MTZ), 2-methyl-5-aminotetrazole (2-MAT), 1-methyl-5-aminotetrazole (1-MAT), 1,3-di(tetrazol-2-yl)propane (2,2-dtp), 1-(tetrazol-1-yl)-3-(tetrazol-2-yl)propane (1,2-dtp), 1,3-di(tetrazol-1-yl)propane (1,1-dtp), 1-ethyltetrazole (1-ETZ), 1-amino-1,2,3-triazole (1-ATRI), 1-amino-1,2,4-triazole (1A-1,2,4-TRI), 1-(1-(tetrazol-2-yl)propan-2-yl)-tetrazole (1,2-idtp), 2,2'-(propane-1,2-diyl)bis(tetrazole) (2,2-idtp), 1-(tetrazol-1-yl)-4-(tetrazol-2-yl)butane (1,2-dtb), 1,4-di(tetrazol-2-yl)butane (2,2-dtb), 1-isopropyltetrazole (1-iPTZ), 1-propyltetrazole (1-PTZ), 1-aminotetrazole (1-AT), 2-aminotetrazole (2-AT), 2-methyltetrazole (2-MTZ), 1,5-diaminotetrazole (1,5-DAT), 2,5-diaminotetrazole (2,5-DAT), (tetrazol-1-yl)methanol (HMTZ), 1,1'-(2-methylpropane-1,2-diyl)bis(tetrazole) (1,1-idtb), 1-(2-methyl-1 -(tetrazol-2-yl)propan-2-yl)-tetrazole (1,2-idtb), 2,2'-(2-methylpropane-1,2-diyl)bis(tetrazole) (2,2-idtb), 3,4-diamino-1,2,4-triazole (DATRI), 3,4,5-triamino-1,2,4-triazole (TATRI), 4-methyl-1,2,4-triazole (MeTRI), 2-amino-1,2,3-triazole (2-ATRI), 1-(1,2,4-triazol-4-yl)-1,2,3-triazole (1,4-BTz), 1,4'-bi(1,2,4-triazole) (iBTz), 2-(1,2,4-triazol-4-yl)-1,2,3-triazole (2,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), para-phenylenbitetrazole (p-PBT), meta-phenylenbitetrazole (m-PBT), ortho-phenylenbitetrazole(o-PBT), tris(2-(tetrazol-1-yl)ethyl)amine (TETA), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(2-azidomethyl)-1H-tetrazole (AMT), 1-(2-azidoethyl)-1H-tetrazole (AET), 1-(3-azidopropyl)-1H-tetrazole (APT), 1-(4-azidobutyl)-1H-tetrazole (ABT), 1,2-(di-5-methylhydrazinotetrazol-1-yl)ethane (1,1-dmhte) and 3-hydrazino-4-amino-1,2,4-triazole (3-HATri).

12. Method for synthesizing a copper(II) azide complex, wherein the copper(II) azide complex is of general formula Cuₐ(N₃)₂ₐ(L)ₓ, wherein L is a ligand, a = 1 to 6 and x = 1 to 6, wherein a copper(II) salt and the ligand are dissolved in water, an alcohol or acetonitrile thus forming a first solution, an azide is dissolved in water, an alcohol or acetonitrile thus forming a second solution, wherein the first solution is agitated and the second solution is added to the first solution resulting in the precipitation of the copper(II) azide complex.

13. Method according to claim 12, wherein the copper(II) salt is a chloride, a sulfate, a nitrate, an acetate, a perchlorate or a carbonate and/or the azide is sodium azide, lithium azide, potassium azide or hydrazoic acid.

14. Method according to claim 12 or 13, wherein the copper(II) azide complex is separated from the mixed first and second solutions, in particular by filtration and washing, and subsequently dried.

15. Ligand for the formation of a copper(II) azide complex of general formula Cuₐ(N₃)₂ₐ(L)ₓ, wherein L is the ligand, a = 1 to 6 and x = 1 to 6, wherein the ligand is 1-(1-(tetrazol-2-yl)propan-2-yl)-tetrazole (1,2-idtp), 2,2'-(propane-1,2-diyl)bis(tetrazole) (2,2-idtp), 1-(2-methyl-1-(tetrazol-2-yl)propan-2-yl)-tetrazole (1,2-idtb), 2,2'-(2-methylpropane-1,2-diyl)bis(tetrazole) (2,2-idtb), 1-(1,2,4-triazol-4-yl)-1,2,3-triazole (1,4-BTz), 1-(4-methyl-1,2,4-triazol-3-yl)-tetrazole (MeTRITZ), 4-methyl-5-(tetrazol-1-yl)-1,2,4-triazol-3-amine (AMeTRITZ), di(1H-tetrazol-1-yl)methane (1,1-dtm), 1-((2H-tetrazol-2-yl)methyl)-1H-tetrazole (1,2-dtm), di(2H-tetrazol-2-yl)methane (2,2-dtm), 1-(3-azidomethyl)-1H-tetrazole (AMT), 1-(3-azidopropyl)-1H-tetrazole (APT) or 1-(4-azidobutyl)-1H-tetrazole (ABT).
